# EUROPÄISCHE PATENTSCHRIFT

(11) **EP 0 671 237 B1**
(45) Veröffentlichungstag und Bekanntmachung des Hinweises auf die Patenterteilung: **08.01.1997**
(21) Anmeldenummer: 95103101.2
(22) Anmeldetag: 04.03.1995
(51) Int. Cl.: B23K 11/30, B28B 7/24, B28B 17/00

(54) **Verfahren zum Herstellen einer Stahlform für Betonpflastersteine mit Abstandshaltern**
Method to manufacture a steel mold, which mold is used for casting concrete pavements with spacer elements
Méthode de fabrication d'un moule en acier pour pavés, comprenant des éléments d'espacement

(30) Priorität: 08.03.1994 DE 4407698
(43) Veröffentlichungstag der Anmeldung: 13.09.1995
(73) Patentinhaber: Rampf Formen GmbH, D-89604 Allmendingen (DE)
(72) Erfinder: Burger, Günter, D-89604 Allmendingen (DE)
(74) Vertreter: Patentanwälte Eisele, Otten & Roth

(56) Entgegenhaltungen:
- US-A- 2 179 693
- US-A- 3 334 857
- US-A- 4 274 824

## Beschreibung

Die Erfindung betrifft ein Verfahren zum Herstellen einer Stahlform für Betonpflastersteine gemäß dem Gattungsbegriff des Anspruchs 1, sowie eine Schweißzange zur Durchführung des Verfahrens und ein Schließplättchen zur Verwendung beim Verfahren. Die Besonderheit der hiermit herzustellenden Betonpflastersteine liegt in sogenannten Abstandshaltern. Darunter versteht man nur wenige Millimeter dicke dammförmige Vorsprünge, die in senkrechter Richtung verlaufend an den Seitenflächen der Steine angeformt sind. Damit die Abstandshalter beim verlegten Pflaster nicht sichtbar, sondern von dem in die Fugen eingebrachten Sand verdeckt sind, erstrecken sie sich nur über den unteren Höhenbereich der Formkörper.

Bei gängigen Mehrkammer-Stahlformen, die durch Brennschneiden aus einer massiven Stahlplatte gefertigt werden, ist es bekannt, zur Modellierung der Abstandshalter in die Formwände entsprechende flache Nuten mit einzubrennen, die sich demzufolge über die gesamte Höhe der Formwand erstrecken. Da aber die Abstandshalter, wie erwähnt, in einer bestimmten Höhe vor dem oberen Rand der Formkammer enden sollen, muß die Nut in der Formwand in ihrem oberen Abschnitt geschlossen oder verfüllt werden.

Es ist bekannt, die Verfüllung dadurch zu erreichen, daß in der Nut eine Auftragsschweißung angebracht wird, und zwar so, daß das Material noch ein wenig über die Nut, d. h. über die Innenfläche der Formwand, übersteht und danach wird dieser Überstand bündig abgeschliffen, so daß in diesem Bereich die ebene Innenwandfläche wieder hergestellt ist. Außerdem wird das untere Ende des Materialauftrages so abgeschliffen, daß eine glatte, sanft in die Nutinnenfläche auslaufende Schulter entsteht.

Das geschilderte bekannte Verfahren ist verständlicherweise außerordentlich arbeitsintensiv. Durch ungenaues Arbeiten beim Ausschleifen der Schulter dringt das Schleifwerkzeug nicht selten zu tief ein (Hinterschliff), so daß sich Schwierigkeiten beim Ausformen der verdichteten Betonkörper ergeben. Der größte Nachteil des bekannten Verfahrens besteht jedoch darin, daß durch die Auftragsschweißungen die Formwände örtlich stark erwärmt werden, so daß sich die Form verzieht. Um diese Verzugserscheinungen zu beheben, muß die gesamte Form einer erneuten Wärmebehandlung unterzogen und dabei eine Verminderung der Werkstoffhärte in Kauf genommen werden.

Der Erfindung liegt die Aufgabe zugrunde, bei der Herstellung der geschilderten Stahlformen die Nuten für die Abstandshalter auf eine rationelle Weise zu schließen, ohne die Qualität (insbesondere Genauigkeit und Härte) der Form zu beeinträchtigen.

Diese Aufgabe wird ausgehend von einem Verfahren der einleitend bezeichneten Art erfindungsgemäß durch die kennzeichnenden Merkmale des Anspruchs 1 gelöst. Danach besteht der Grundgedanke der Erfindung darin, daß anstelle der Nutverfüllung durch Auftragsschweißung ein passend vorgeformter Stahlkörper (Schließplättchen) durch Buckelschweißen in die Nut eingeschweißt wird. Das Schließplättchen hat dazu entsprechend geformte und dimensionierte Schweißbuckel. Es wird mit den Elektrodenarmen einer Schweißzange in die Nut gedrückt, wobei durch das aufgebrachte genau dimensionierte Energiequantum die Schweißbuckel plastisch werden und nach Abschluß des schlagartigen Vorganges die Nut bündig, eben und spaltfrei geschlossen und außerdem eine saubere Schulter vorhanden ist. Das Schließplättchen kann aus einem bei seiner Herstellung kaltverfestigten unlegierten oder niedriglegierten Stahl bestehen, der die gleiche Härte wie der Formwerkstoff selbst aufweist.

Nahezu jegliche materialabtragende Nacharbeit entfällt. Die Wärmeentwicklung ist so gering, daß ein Verziehen der Form ausgeschlossen ist und diese somit auch nicht nachträglich gerichtet werden muß. Die ursprüngliche Härte der Form bleibt bestehen. Die exakte Form des Schließplättchens, das vorzugsweise eine geneigte ebene Stirnfläche hat, ergibt auch einen fehlerlos ausgebildeten Schulterbereich, so daß sich beim Gebrauch der Form die verdichteten Betonkörper einwandfrei ausformen lassen.

Durch den erreichten hohen Automatisierungsgrad kann die Fertigungszeit nachhaltig gesenkt und gleichzeitig eine Qualitätsverbesserung der Formen erreicht werden.

Zur Durchführung des beschriebenen Verfahrens wird eine Buckelschweißzange gemäß dem Anspruch 4, mit einem festen und einem beweglichen Backen vorgeschlagen. Um das Schließplättchen zu halten ist ein Aufnahmeteil vorgesehen, das an einem Backen um eine Querachse des Schließplättchens kippfähig gelagert ist. Dadurch erreicht das Schließplättchen auch bei nicht ganz genau parallel angelegter Schweißzange seine definierte Endstellung, bei der seine ebene Fläche die Formwand-Innenfläche fortsetzt, mit großer Genauigkeit.

Vorzugsweise ist in die Anlegefläche des Aufnahmeteils für das Schließplättchen ein Magnet zum Festhalten desselben eingesetzt. Das Aufnahmeteil hat vorzugsweise eine halbzylindrische Form und gleitet in einer entsprechenden Lagerschale des Backens, so daß die Kippachse in der ebenen Fläche des am Aufnahmeteil anliegenden Schließplättchens liegt.

Zur Verwendung beim erfindungsgemäßen Verfahren wird ein Schließplättchen gemäß Anspruch 7 vorgeschlagen.

Ein Ausführungsbeispiel der Erfindung wird nachfolgend anhand der Zeichnung erläutert. Im einzelnen zeigt:
- Fig. 1: eine schematische räumliche Darstellung einer Mehrfachform in teilfertigem Zustand,
- Fig. 2: ebenfalls in räumlicher Darstellung ein herausgebrochenes Stück einer Formwand gemäß Fig. 1 in größerem Maßstab,
- Fig. 3: die Formwand gemäß Fig. 2 mit einem eingesetzten Schließplättchen,
- Fig. 4 - 6: drei Ansichten eines Schließplättchens in größerem Maßstab,
- Fig. 7: eine schematische Ansicht einer Buckelschweißzange und
- Fig. 8: die Elektrodenarme der Zange nach Fig. 7 in größerem Maßstab.

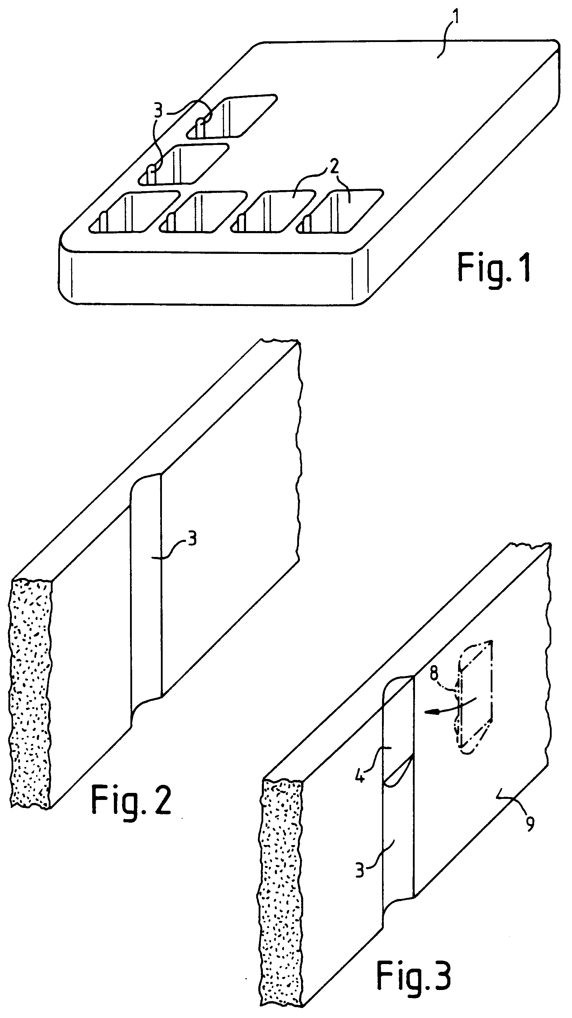

Fig. 1 zeigt als Rohling eine teilweise bearbeitete Stahlplatte 1. Aus ihr sind zur Herstellung rechteckiger Betonpflastersteine entsprechende Fensteröffnungen ausgebrannt, welche die Formkammern 2 bilden. Diese Bearbeitung erfolgt auf einer NC-gesteuerten Brennschneidmaschine, wobei ein autogener Flammstrahl eingesetzt wird. Die Programmierung ist so getroffen, daß der Brennstrahl hin und wieder seine gerade Spur verläßt und einen kleinen Bogen ausfährt, wodurch die beispielhaft angedeuteten ausgerundeten Nuten 3 entstehen. Um den oberen Abschnitt der Nuten zu schließen, ist hier jeweils ein Schließplättchen 4 durch Buckelschweißung eingeschweißt. Fig. 3 zeigt eine auf diese Weise geschlossene Nut 3, wobei das Schließplättchen in seiner Stellung vor dem Einschweißen zusätzlich strichpunktiert angedeutet ist.

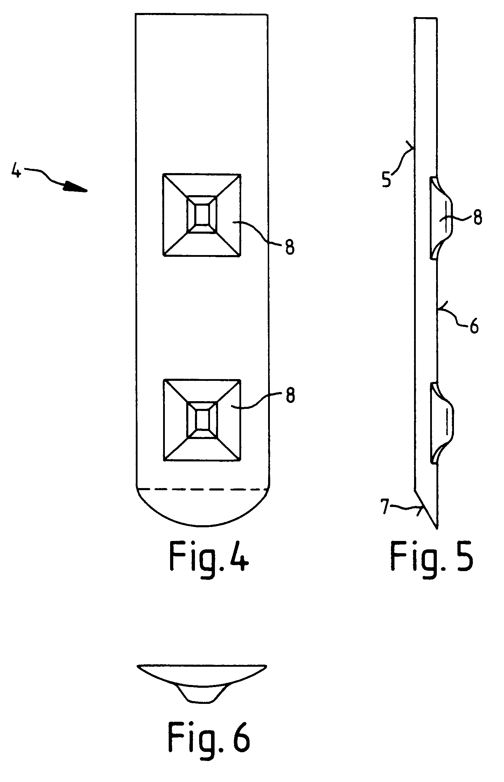

Die Figuren 4 bis 6 zeigen in Vorder-, Seiten- und Stirnansicht eines der verwendeten Schließplättchen 4 in etwa dreifacher natürlicher Größe. Es hat die Form einer Leiste mit einer ebenen Fläche 5 und einer nach außen gewölbten Fläche 6 und damit eine Querschnittsform, die derjenigen der Nut 3 genau entspricht. Von den rechtwinklig zu den Längskanten abgeschnittenen Enden hat eines eine zur Längsachse senkrechte Stirnfläche und das andere eine schräge Stirnfläche 7, die mit der ebenen Fläche 5 des Schließplättchens einen stumpfen Winkel bildet. An der gewölbten Fläche 6 sind zwei im Grundriß quadratische Schweißbuckel 8 angeformt, die als etwa pyramidenförmig bezeichnet werden können mit abgestumpfter Spitze. Das Werkstoffquantum dieser Schweißbuckel 8 wird beim Schweißvorgang plastisch bis flüssig und verteilt sich in der Nut 3, wobei durch entsprechende Bemessung sicher gestellt ist, daß letztlich die ebene Fläche 5 des Schließplättchens mit der Innenfläche 9 (Fig. 3) der Formkammer genau flächengleich ist. Am unteren Ende des Schließplättchens fällt, wie ebenfalls Fig. 3 zeigt, die ebene Fläche 5 über die schräge Stirnfläche 7 in die Nut ab. Die so gebildete schräge Schulter verhindert, daß an dieser Stelle Beton in der Form zurückbleibt und Unsauberkeiten am Pflasterstein entstehen.

Das Schließplättchen ist ein Massenartikel. Es besteht aus einem unlegierten oder niedriglegierten Stahl und erhält seine Form auch durch Kaltverformung, wobei sich der Stahl zu großer Härte verfestigt, die auch durch den Buckelschweißvorgang nicht verloren geht und mit der Härte und Abriebfestigkeit der Formwände ebenbürtig ist.

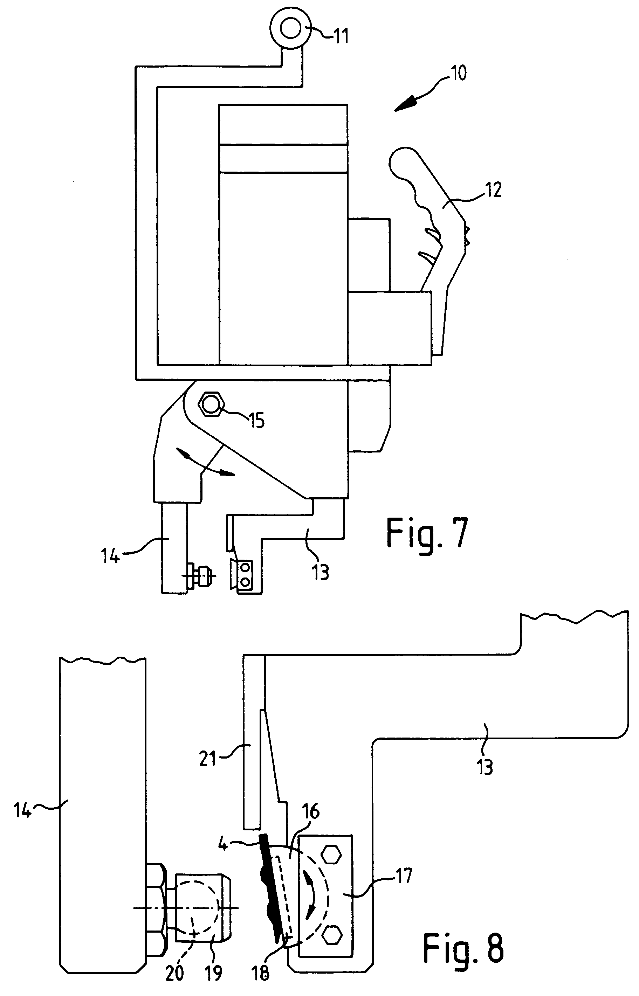

Zur Durchführung des Buckelschweißverfahrens wird eine an sich bekannte Schweißzange 10 verwendet, die in Fig. 7 dargestellt ist und einen Schweißtransformator und die elektrischen Steuereinrichtungen zur genauen Einstellung der Schweißstromstärke und der Stromflußzeit enthält. Die Schweißzange ist mittels einer Öse 11 an einer nicht dargestellten Zugvorrichtung mit einem beweglichen Arm aufgehängt, so daß ihr Gewicht kompensiert ist. Sie kann an einem Handgriff 12, der auch Bedienungstasten enthält, innerhalb des Arbeitsbereichs verhältnismäßig leicht nach allen Richtungen bewegt werden. Unten weist die Schweißzange einen abgekröpften festen Elektrodenarm 13 und einen bei 15 gelagerten schwenkbaren Elektrodenarm 14 auf. Beide Elektrodenarme sind wassergekühlt und sind in ihrer geometrischen Form sowie ihren beweglichen Aufnahme- und Druckteilen speziell für diesen Einsatzzweck gestaltet.

An dem festen Elektrodenarm 13 ist ein halbzylindrisches kupfernes Aufnahmeteil 16 in einer halbzylindrischen Lagerschale aufgenommen und gegen axiale Verschiebung an beiden Seiten durch Isolierstoffplatten 17 gesichert. An die achsparallele ebene Aufnahmefläche des Aufnahmeteils 16 ist ein Schließplättchen 4 mit seiner ebenen Fläche angelegt. Es wird mittels eines in die Aufnahmefläche eingebetteten Permanentmagneten 18 gehalten. Durch diese stromleitende bewegliche Halteanordnung kann sich das Schließplättchen 4 ungehindert in die Nut einpassen.

An dem schwenkbaren Elektrodenarm 14 ist ein kupfernes Druckstück 19 an einem Kugelkopf 20 gelagert. Um das Schließplättchen beim Anlegen der Schweißzange 10 auch höhenmäßig leicht in die richtige Position zu bringen, ist ein gabelförmiger Höhenanschlag 21 aus Isolierstoff an dem festen Elektrodenarm 13 angebracht. Seine nach unten stehenden Gabelzinken befinden sich zu beiden Seiten des Schließplättchens und werden auf den Rand der Formwand aufgesetzt.

Der Arbeitsvorgang beim Anbringen eines Schließplättchens 4 erfolgt in Sekundenschnelle. Das Plättchen wird an das Aufnahmeteil 16 angesetzt und vom Permanentmagneten 18 sofort festgehalten. Dann fügt man die Schweißzange von oben über die Formwand und setzt dabei den Höhenanschlag 21 auf den Rand der Formwand auf. Das Schließplättchen 4 fügt sich nun in die Nut 3, während das Druckstück 19 an der gegenüberliegenden Seite der Formwand anliegt. Durch Betätigen eines ersten Auslösers wird nunmehr die Zange geschlossen, d. h. das Schließplättchen 4 mit hoher Kraft mittels eines Pneumatikzylinders in die Nut 3 gedrückt. Sodann wird der Schweißvorgang ausgelöst, während dessen die gespeicherten pneumatischen Kräfte in dem Maße, wie die Schweißbuckel 8 plastisch werden, das Schließplättchen in seine endgültige Lage drücken. Danach wird die Schweißzange geöffnet. Es kann sofort ein neues Schließplättchen angelegt und die Arbeit an der nächsten Nut fortgesetzt werden.
- 1: Stahlplatte
- 2: Formkammer
- 3: Nut
- 4: Schließplättchen
- 5: ebene Fläche
- 6: gewölbte Fläche
- 7: Stirnfläche
- 8: Schweißbuckel
- 9: Innenfläche
- 10: Schweißzange
- 11: Öse
- 12: Handgriff
- 13: fester Elektrodenarm
- 14: schwenkbarer Elektrodenarm
- 15: Lager
- 16: Aufnahmeteil
- 17: Isolierstoffplatte
- 18: Permanentmagnet
- 19: Druckstück
- 20: Kugelkopf
- 21: Höhenanschlag

## Patentansprüche

1. Verfahren zum Herstellen einer Stahlform für Betonpflastersteine mit Abstandshaltern, bei dem die einzelnen Formkammern (2) durch Brennschneiden aus einer Stahlplatte (1) ausgeschnitten werden, wobei der Brennstrahl so geführt wird, daß in den Formwänden (9) wenigstens eine Nut (3) entsteht, welche den Querschnitt eines Abstandhalters bestimmt, und sodann die Nut (3) in ihrem oberen Abschnitt verfüllt wird, dadurch gekennzeichet, daß ein Schließplättchen (4), dessen Querschnitt etwa dem Querschnitt der Nut (3) entspricht und das an seiner der Nut (3) zugewandten Seite Schweißbuckel (8) aufweist, durch Buckelschweißung in den zu verfüllenden Nutabschnitt eingeschweißt wird.

2. Verfahren nach Anspruch 1, dadurch gekennzeichnet, daß die Schließplättchen (4) aus einem kaltverfestigten unlegierten oder niedriglegierten Stahl bestehen.

3. Verfahren nach Anspruch 1, dadurch gekennzeichnet, daß die Schließplättchen (4) am unteren Ende eine zu ihrer ebenen Fläche (5) um eine Querkante geneigte ebene Schrägfläche (7) aufweisen.

4. Schweißzange zur Durchführung des Verfahrens nach Anspruch 1, wobei an einem Backen (13) ein Aufnahmeteil (16) für das Schließplättchen (4) um eine Querachse kippfähig gelagert ist und das Aufnahmeteil Mittel zum Festhalten des Schließplättchens aufweist.

5. Schweißzange nach Anspruch 4, dadurch gekennzeichnet, daß in die Anlagefläche des Aufnahmeteils (16) für das Schließplättchen (4) ein Magnet (18) zum Festhalten des Schließplättchens (4) eingesenkt ist.

6. Schweißzange nach Anspruch 4, dadurch gekennzeichnet, daß das Aufnahmeteil (16) eine halbzylindrische Form hat und in einer entsprechenden Lagerschale des betreffenden Backens der Schweißzange gleitet, so daß die Kippachse eine Querlinie der Anlagefläche ist.

7. Schließplättchen zur Verwendung bei einem Verfahren nach Anspruch 1, welches aus einem kaltverfestigten unlegierten oder niedriglegierten Stahl besteht, eine längliche Form hat, auf der einen Seite eben und auf der anderen Seite gewölbt ist und eine mit der ebenen Fläche einen stumpfen Winkel bildende ebene Stirnfläche und an der gewölbten Fläche wenigstens zwei pyramidenähnliche Schweißbuckel aufweist.

## Claims

1. Method for the manufacture of a steel mould for concrete paving-stones with spacer elements, in which the individual mould chambers (2) are cut out of a steel plate (1) by flame cutting, the flame jet being guided so that at least one groove (3) is produced in the mould walls (9), which groove determines the cross-section of a spacer element and then the groove (3) is filled in its upper section, characterised in that a small closing plate (4), whereof the cross-section corresponds approximately to the cross-section of the groove (3) and which comprises welding projections (8) on its side facing the groove (3), is welded into the groove section to be filled by projection welding.

2. Method according to Claim 1, characterised in that the small closing plates (4) consist of a cold work-hardened, non-alloy or low-alloy steel.

3. Method according to Claim 1, characterised in that at the lower end, the small closing plates (4) have a flat inclined surface (7) inclined by a transverse edge with respect to their flat surface (5).

4. Welding tongs for carrying out the method according to Claim 1, on one jaw (13), a receiving part (16) for the small closing plate (4) being mounted so that it is able to tilt about a transverse axis and the receiving part comprising means for retaining the small closing plate.

5. Welding tongs according to Claim 4, characterised in that a magnet (18) for retaining the small closing plate (4) is recessed into the contact surface of the receiving part (16) for the small closing plate (4).

6. Welding tongs according to Claim 4, characterised in that the receiving part (16) has a semi-cylindrical shape and slides in a corresponding bearing shell of the respective jaw of the welding tongs, so that the tilting axis is a transverse line of the contact surface.

7. Small closing plate for use in a method according to Claim 1, which consists of a cold work-hardened non-alloy or low-alloy steel, has an elongated shape, is flat on one side and curved on the other side and has a flat end face forming an obtuse angle with the flat surface and on the curved surface has at least two pyramid-like welding projections.

## Revendications

1. Procédé pour fabriquer un moule en acier pour des pavés en béton ayant des éléments d'écartement, dans lequel les chambres de moule individuelles (2) sont découpées par découpage au chalumeau à partir d'une plaque d'acier (1), la flamme du chalumeau étant guidée de sorte qu'il se crée, dans les parois du moule (9), au moins une rainure (3) qui détermine la section transversale d'un élément d'écartement et, ensuite, la rainure (3) est remplie dans sa partie supérieure,
caractérisé en ce qu'une plaquette de fermeture (4), dont la section transversale correspond sensiblement à la section transversale de la rainure (3) et qui présente, sur sa face en regard de la rainure (3), des bossages de soudure (8), est soudée dans la partie de rainure à remplir, par soudage à bossages.

2. Procédé selon la revendication 1,
caractérisé en ce que les plaquettes de fermeture (4) sont constituées d'un acier écroui non allié ou faiblement allié.

3. Procédé selon la revendication 1,
caractérisé en ce que les plaquettes de fermeture (4) présentent, à l'extrémité inférieure, une surface inclinée (7) plane, inclinée par rapport à sa surface plane (5) autour d'un bord transversal.

4. Pince de soudage pour la mise en oeuvre du procédé selon la revendication 1, une partie de réception (16) pour les plaquettes de fermeture (4) étant montée en pouvant basculer autour d'un axe transversal sur une mâchoire (13) et la partie de réception présentant des moyens pour immobiliser la plaquette de fermeture.

5. Pince de soudage selon la revendication 4,
caractérisée en ce qu'un aimant (18) pour immobiliser la plaquette de soudage (4) est noyé dans la surface d'appui de la partie de réception (16) pour la plaquette de fermeture (4).

6. Pince de soudage selon la revendication 4,
caractérisée en ce que la partie de réception (16) présente une forme semi-cylindrique et coulisse dans une coque de palier correspondante de la mâchoire respective de la pince de soudage, de sorte que l'axe de basculement est une ligne transversale de la surface d'appui.

7. Plaquette de fermeture pour être utilisée dans un procédé selon la revendication 1, laquelle est constituée d'un acier écroui non allié ou faiblement allié, présente une forme allongée, est plane sur une face et cintrée sur l'autre face, et présente une surface frontale plane formant avec la surface plane un angle obtus et, sur la surface cintrée, au moins deux bossages de soudure pyramidaux.
